# FASCICULE DE BREVET EUROPEEN

(11) **EP 1 986 083 B1**
(45) Date de publication et mention de la délivrance du brevet: **09.06.2010**
(21) Numéro de dépôt: 08103538.8
(22) Date de dépôt: 15.04.2008
(51) Int. Cl.: G06F 3/042, G06F 3/048

(54) **Procédé de détection d'une flexion exercée sur un écran flexible, et appareil doté d'un tel écran pour la mise en oeuvre du procédé**
Verfahren zur Erkennung des Drucks, der auf einen flexiblen Bildschirm ausgeübt wird, und Vorrichtung mit Bilschirm zur Umsetzung des Verfahrens
Method for detecting the pressure applied on a flexible screen, and device comprising a screen for the implementation of the method

(30) Priorité: 27.04.2007 FR 0754765
(43) Date de publication de la demande: 29.10.2008
(73) Titulaire: Thomson Licensing, 92443 Issy-les-Moulineaux Cedex (FR)
(72) Inventeur: Prat, Christophe, 92648 Boulogne Cedex (FR); Patry, Nadine, 92648 Boulogne Cedex (FR); Leroy, Philippe, 92648 Boulogne Cedex (FR)
(74) Mandataire: Le Dantec, Claude

(56) Documents cités:
- EP-A- 0 144 088
- WO-A-86/03618
- WO-A-2005/026938
- WO-A-2006/134552
- FR-A1- 2 480 967
- US-A1- 2005 040 962

## Description

L'invention concerne un procédé de détection de la flexion d'un écran affichant une image et un appareil doté d'un tel écran pour la mise en oeuvre du procédé.

De nos jours, un grand nombre de communications s'effectuent par fibre optique. Un photoémetteur émet une lumière à l'intérieur de la fibre optique fabriquée dans la matière translucide. La lumière se réfléchit ensuite sur les parois internes de la fibre et ressort à une extrémité où elle est captée par un photorécepteur. La fibre n'a pas besoin d'être maintenue en ligne droite, grace à un indice de réflexion adéquat, la lumière se réfléchit sur les parois internes de la fibre et continue son chemin jusqu'au bout.
Dans un autre domaine, on a besoin de connaître les déformations d'un corps solide. Par exemple, la déformation de poutres métalliques est détectable par la variation de la valeur de réseaux résistifs collées à elles. La valeur de la résistance varie plus ou moins en fonction de la direction de la flexion.
Dans un autre domaine, il est connu des capteurs de compression, par exemple ceux destinés à équiper un écran tactile. Des couches de substrats compressibles constituent un condensateur dont la constante diélectrique varie si la couche intermédiaire est comprimée. Les couches de substrats sont déposées sur la face inférieure de l'écran et délimitent des zones. Le périmètre de ces zones apparaît par une sérigraphie gravée sur l'écran, ou par un tracé affiché. En reliant les couches de substrat à un ensemble de détecteurs, il est possible de détecter la zone soumise à une pression.
Récemment, sont apparus des écrans flexibles réalisés sur des supports souples. La demande de brevet US2006/039031 déposée par la société Fuji et publiée le 23 Février 2006, décrit un appareil photo ayant une cavité cylindrique. Un écran flexible s'enroulant autour d'un axe se loge dans la cavité, une tige fixée sur un coté de l'écran permet à l'utilisateur d'extraire l'écran de son logement et de le déplier afin de le rendre visible. La photo prise par l'appareil photo s'affiche alors sur l'écran déplié. L'interface utilisateur est réalisée par des touches disposées sur une partie rigide reliée à l'écran souple. Parmi les technologies d'écran souple, on peut citer celle des écrans OLED (acronyme de « Organic Light Emitting Diodes »). La structure d'un dispositif OLED consiste en un empilement de couches organiques de quelques dizaines de nanomètres d'épaisseur. Déposée sur un support mince et flexible, une telle structure représente une épaisseur négligeable et peut donc supporter sans dommage une déformation consécutive à une flexion du support. Mais une telle structure fine ne permet pas de l'équiper d'un substrat compressible afin de rendre tactile un tel écran. Pourtant, la possibilité de transmettre une commande par la simple flexion de l'écran offre de larges possibilités de navigation. Comme on l'a cité précédemment, il est connu de coller des réseaux résistifs sur le matériau déformable. Mais le collage de réseaux résistifs à l'arrière d'un écran flexible nécessite de réaliser des pistes de connexion pour les relier à des détecteurs de variations de résistance. L'ensemble écran et réseaux résistifs devient alors fragile.

Le document WO 2005/026938, publié le 24 mars 2005 décrit un écran plat tactile sur lequel un utilisateur vient exercer une pression. Des cellules émettent des faisceaux perpendiculairement à la surface de l'écran. L'utilisateur approche son doigt de la zone considérée, ce qui a pour effet de réfléchir le faisceau lumineux qui de ce fait se propage dans le substrat transparent. Un détecteur placé sur le côté permet de détecter la position du doigt, ce détecteur est par exemple une ligne de CCD placés devant des lentilles. De nombreuses techniques de détection sont utilisées pour déterminer la position de l'endroit où se produit la réflexion. Toutes ces techniques consistent à disposer une pluralité d'émetteurs de faisceaux permettant de détecter si l'utilisateur exerce ou non une pression sur une zone déterminée. Ces techniques impose d'utiliser une multiplicité d'émetteurs et de détecteurs associés, ce qui entraîne un coût important si la surface susceptible d'être pressée est grande

Le document EP 144 088 - WANG publié le 12 juin 1985 décrit un écran convexe sur lequel un utilisateur pose le doigt, ce qui enfonce une couche de plastique transparent. De ce fait, certains rayons émis par l'écran subissent une réflexion à l'intérieur de la couche de plastique molle.

Le document FR 2 480 967 - WESTERN ELECTRIC publié le 23 octobre 1981 décrit un écran sur lequel un utilisateur pose le doigt, ce qui enfonce une couche de plastique transparent, et crée un changement de milieu dans le substrat transparent. De ce fait, les signaux lumineux provenant de l'écran et qui sont emprisonnés par réflexion totale subissent un changement qui est mesuré par des capteurs placés sur le côté.

Le document WO 2006/134552 - PHILIPS publié le 21 décembre 2006 décrit un écran flexible capable de mesurer les déformations qu'un utilisateur lui fait subir par des flexions ou compression. Des diodes LED sont positionnée sur le côté de l'écran et des photodiodes sont placées sur le côté opposé. De cette façon, les photodiodes peuvent mesurer la quantité de lumière réfléchie à l'intérieur du substrat.

Le document WO 86/03618 - UNIV CALIFORNIA publié le 19 juin 1986 décrit un écran tactile composé de deux substrats. Le substrat supérieur est éclairé sur le côté afin de réfléchir la lumière. La lumière se réfléchit entre la surface du substrat supérieur et le substrat inférieur. Des trous dans le substrat inférieur sont mis visuellement en évidence par une différence de réflexion.

Le document US 2005040962 - FUNKHOUSER publié le 24 février 2005, décrit un appareil cylindrique doté d'un écran flexible qui s'enroule à l'intérieur de l'appareil. L'écran flexible est tactile.

La présente invention propose une autre façon de détecter la flexion d'un écran avec une fiabilité accrue.

L'invention a pour objet un procédé de détection d'une flexion exercée sur un écran flexible constitué d'au moins un substrat émettant une pluralité de faisceaux lumineux et un substrat transparent traversé par une partie desdits faisceaux lumineux représentative d'une image affichée;
caractérisé en ce qu'une autre partie des faisceaux de lumière se réfléchissent à l'intérieur du substrat transparent pour sortir sur au moins un des cotés du substrat transparent, le procédé comportant une pluralité d'étapes d'affichage d'images associées à une zone de l'écran et une pluralité d'étapes de détection de l'amplitude lumineuse des faisceaux sortant par au moins un coté du substrat, chaque étape de détection mesurant l'amplitude des faisceaux issus de l'image affichée sur l'écran afin de déterminer si la zone associée à l'image est soumise à une flexion.
De cette façon, on utilise la lumière émise par l'écran afin d'effectuer une mesure de la lumière transmise dans l'épaisseur de l'écran et en déduire la position de la zone dudit écran où s'exerce une flexion. Chaque étape de détection étant associée à une image déterminée afin de déterminer la zone de l'écran où s'exerce la flexion. De cette façon, il est possible de balayer l'écran et de déterminer zone par zone si une flexion est exercée. Selon un perfectionnement, la variation des valeurs fournies au cours du balayage de l'écran permet d'en déduire le rayon de courbure de la flexion exercée. De cette façon, il est possible de fournir à l'application de gestion de l'écran un nouveau paramètre d'entrée.
Selon un autre perfectionnement, l'affichage de l'image pour la détection des flexions intervient suffisamment rapidement pour ne pas être visible d'un utilisateur, l'écran affichant une autre image le reste du temps. De cette façon, la détection des flexions est rapide et ne nuit pas à la visualisation des autres images qui doivent être perceptibles par un utilisateur. Selon un autre perfectionnement, ces autres images affichées définissent des zones sur lesquelles une flexion exercée permet d'introduire une commande. De cette façon, l'écran devient tactile en délimitant des zones qui déclenchent des actions si elles sont fléchies.
Selon un autre perfectionnement, l'écran comporte également des guides d'onde optique à l'intérieur du substrat transparent pour guider les faisceaux de lumière afin qu'ils se réfléchissent à l'intérieur du substrat transparent vers des détecteurs. De cette façon, la détection des flexions est plus précise. Selon un autre perfectionnement, le procédé comporte une étape d'étalonnage au cours de laquelle l'écran ne subit pas de flexion et une mesure des faisceaux de lumière se réfléchissant à l'intérieur du substrat transparent est effectuée. Ainsi, en le mettant à plat l'appareil calcule une valeur étalon qui sera ensuite utilisée par comparaison avec les valeurs mesurées lorsque l'écran subit des flexions.
Selon un autre perfectionnement, deux groupes de détecteurs pour la mesure des faisceaux de lumière se réfléchissant à l'intérieur du substrat transparent sont disposés sur deux cotés opposés de l'écran, les mesures effectuées par chaque groupe permettant de détecter des flexions différentes. Ainsi, il est possible de détecter plusieurs flexions exercées sur l'écran. Selon un mode de réalisation particulier, l'écran est de forme rectangulaire et dispose de détecteurs sur au moins deux cotés opposés. Selon un autre perfectionnement, l'écran flexible est disposé sur un tapis de billes posé lui-même sur une surface rigide, la flexion consistant à déformer l'écran entre les billes. Ainsi, il est possible de définir à la fabrication de l'écran des zones individuellement flexibles, en les délimitant par des billes conférant de la rigidité à certains endroits de l'écran.
La présente invention a également pour objet un appareil comportant un écran flexible de visualisation d'une image, ledit écran comportant au moins un substrat émettant une pluralité de faisceaux lumineux et un substrat transparent traversé par une partie desdits faisceaux lumineux représentative d'une image affichée ; caractérisé en ce qu'une autre partie des faisceaux de lumière se réfléchissent à l'intérieur du substrat transparent pour sortir sur au moins un des cotés de l'écran flexible, l'appareil comportant des détecteurs pour la détection de l'amplitude lumineuse des faisceaux réfléchis à l'intérieur du substrat, les faisceaux de lumière formant une pluralité d'images successivement affichées sur une zone déterminée de l'écran, chaque détecteur mesurant l'amplitude des faisceaux issus de chaque image affichée sur une zone de l'écran afin de déterminer si cette zone est soumise à une flexion.

D'autres caractéristiques et avantages de l'invention apparaîtront maintenant avec plus de détails dans le cadre de la description qui suit d'exemples de réalisation donnés à titre illustratif en se référant aux figures annexées qui représentent :
- la figure 1 est un diagramme bloc d'un dispositif d'introduction de commandes équipé d'un écran flexible selon un exemple de réalisation de l'invention,
- la figure 2 est une illustration du chemin parcouru par la lumière émise par l'épaisseur de l'écran,
- la figure 3 est un schéma montrant le principe de propagation des ondes lumineuses lorsque l'écran est plat et lorsqu'il est fléchi,
- la figure 4 est un schéma montrant une structure d'écran doté de capteurs dans les coins de l'écran,
- la figure 5 montre un autre exemple d'une structure d'écran flexible sur lequel des pressions sont exercées.

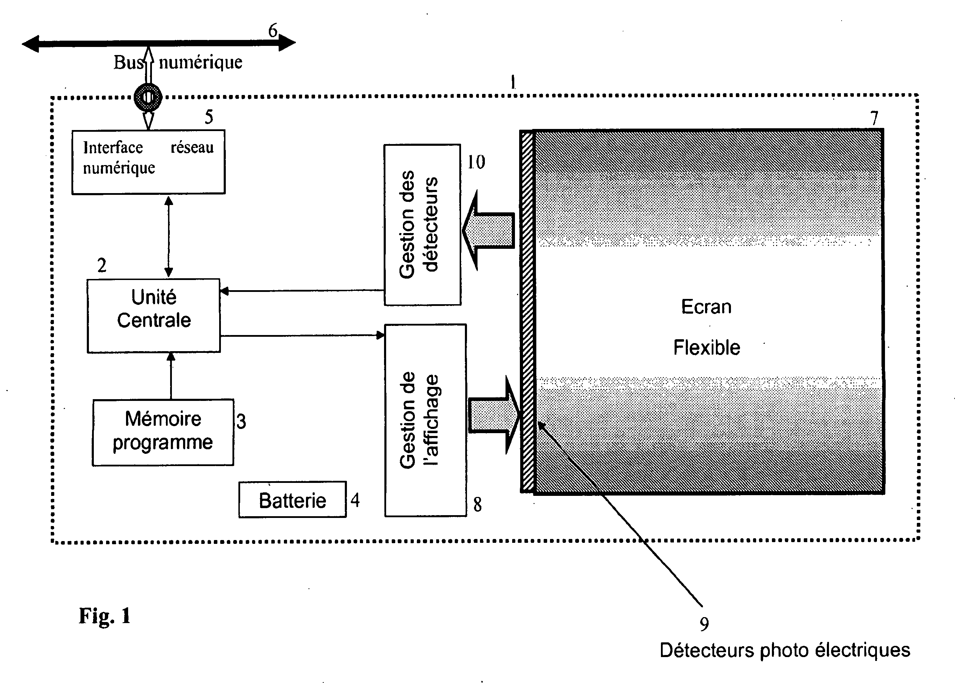

A l'aide de la figure 1, on décrit tout d'abord un exemple de réalisation de la présente invention sous la forme d'un appareil électronique portable 1, par exemple un PDA ou une télévision portative. D'autres appareils sont également utilisables pour la présente invention, par exemple un lecteur MP3, un téléphone portable, un ordinateur personnel, ou tout appareil disposant d'un affichage et d'un moyen d'introduction de commandes. L'appareil 1 comprend une unité centrale 2 reliée à une mémoire de programme 3 et une batterie 4 conférant une autonomie d'au moins plusieurs heures en fonctionnement. Le programme exécutable est avantageusement enregistré dans une mémoire morte. Il peut aussi être réalisé avec l'unité centrale 2 sous la forme d'un circuit spécialisé de type ASIC par exemple. L'appareil 1 comprend également une interface 5 pour la communication avec un bus numérique à haut débit 6 permettant de recevoir des données audio et/ou vidéo en temps réel.
L'appareil 1 dispose également d'un écran 7 d'affichage réalisé en technologie OLED. La gestion de l'affichage s'effectue à travers un circuit spécialisé 8, ce circuit comporte un générateur de caractères et de graphismes qui permet d'afficher à l'écran des menus, notamment des menus de navigation, des pictogrammes (par exemple, une fenêtre de zoom, des icônes), une ou plusieurs barres de boutons, etc. Le circuit de gestion de l'affichage est contrôlé par l'Unité Centrale 2. L'écran 7 est fabriqué sur un support souple permettant de lui conférer une certaine flexibilité. Il comporte au moins deux couches : un substrat émettant une pluralité de faisceaux lumineux représentatifs d'une image affichée et un substrat transparent traversé par une partie au moins des faisceaux lumineux. La technologie OLED autorise la flexion de l'écran en même temps que son fonctionnement. Une spécificité des structures OLED est de piéger une partie de la lumière émise en son sein et de la conduire latéralement. La structure OLED s'apparente ainsi à un guide d'onde optique comparable à une fibre optique.
Des détecteurs photoélectriques 9, typiquement des cellules, sont disposés sur les cotés de l'écran de façon que les rayons incidents qui se réfléchissent à l'intérieur du substrat transparent pour sortir sur le coté, frappent directement la surface photosensible des cellules. Les détecteurs 9 sont électriquement reliés à un circuit de gestion 10 pour la conversion des signaux analogiques fournis par les détecteurs 9 en des valeurs numériques exploitables par l'unité centrale 2.

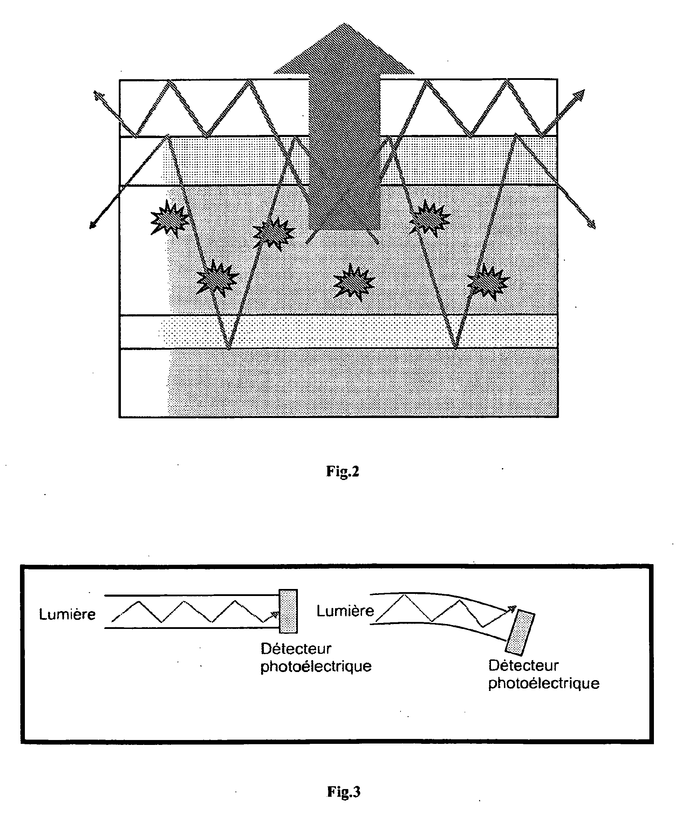

La figure 2 montre le chemin de la lumière émise par le substrat émissif OLED. On constate que 80% de la lumière est piégée dans les couches de substrat, des tests ont montré que la lumière émise disparaît dans les divers milieux selon les proportions suivantes :
- 52% dans les couches organiques et ITO (acronyme de « Indium Tin Oxyde »,
- 26% dans le substrat de verre.
- 20% de la lumière est effectivement émise à l'extérieur de l'écran
- 2 % disparaît car absorbé par les différents matériaux.

Comme le montre la figure 2, une partie de la lumière se propage dans l'épaisseur de la structure OLED en se réfléchissant au niveau des interfaces entre deux couches de matériaux d'indice de réfraction différents. De ce fait, une certaine partie de la lumière s'échappe par les cotés de l'écran. Au moins un détecteur photo sensible est disposé sur le coté afin de mesurer la partie de la lumière qui se réfléchit à l'intérieur du substrat transparent. Si une flexion est appliquée à l'écran, d'avantage de lumière peut sortir de l'intérieur de l'écran et la fraction qui parvient aux détecteurs est plus faible. La présente invention consiste à mesurer la lumière qui ressort sur le coté de l'écran et à en déduire les caractéristiques de la flexion appliquée audit écran.

La figure 3 illustre le fait que si l'écran est maintenu à plat, la quantité de lumière émise par les cellules photo émissives et transmise à l'intérieur de l'écran pour ressortir sur le coté, est maximale. Si par contre, l'écran est fléchi, la quantité de lumière diminue car une partie réussit à sortir du substrat en se réfléchissant sur la surface fléchie selon un angle inférieur à l'angle de réfraction.

La faculté de propager le rayon lumineux entre les couches de l'écran dépend de l'indice de réfraction. Les cellules photoémissives sont peu directives et émettent des faisceaux selon un angle de 180°. Lorsqu'un rayon lumineux frappe une surface translucide sous un certain angle avec la direction normale, l'angle du rayon réfracté varie selon le coefficient de réfraction. Dans le cas des substrats utilisés dans les écrans OLED, le rayon lumineux est émis dans une couche plus réfringente que la couche extérieure de sorte que si le rayon incident rase la surface interne de l'écran, la valeur limite de l'angle de réfraction est dépassé, et le rayon va se réfléchir totalement dans le substrat, nous sommes alors dans le cas d'une réflexion totale, les deux surfaces de l'écran jouant alors le rôle de guide d'onde. Mais si l'écran est fléchi, alors l'angle incident peut diminuer, jusqu'à se trouver en dessous de l'angle de réflexion, de sorte que le rayon lumineux quitte la couche de substrat et sort de l'écran. Lorsque l'écran est fléchi entre la zone émettrice de lumière et les détecteurs photoélectriques, le faisceau lumineux ne parvient plus aux détecteurs. Dans ce cas, les détecteurs fournissent une valeur minimale ou nulle de l'amplitude lumineuse reçue.

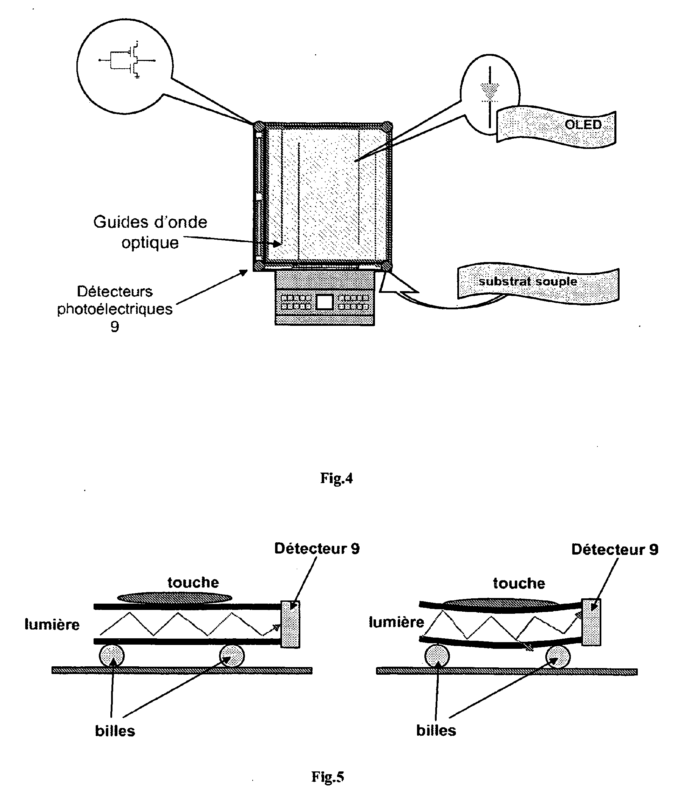

La figure 4 présente un exemple de réalisation de l'écran 7 doté de détecteurs photoélectriques 9. La structure d'écran est également dotée d'une pluralité de guides d'onde permettant de guider la lumière transmise à l'intérieur de l'écran vers les détecteurs 9 placés à chaque coin de l'écran. Les guides d'ondes sont des structures d'une épaisseur inférieure à 200 µm. La lumière est ainsi guidée vers les détecteurs par ces structures et les deux plaques de verre. Dans l'exemple de la figure 4, quatre guides d'onde sont disposés dans l'épaisseur de l'écran et reliés à quatre détecteurs. Cette disposition limite le nombre de détecteurs, mais limite également la précision de détection des flexions.
D'autres dispositions permettent un quadrillage complet de l'écran en disposant une rangée de détecteurs 9 tout au long d'un coté de l'écran 7. L'expérimentation a montré que la largeur d'un guide d'onde couvre de 5 à 25 pixels élémentaires. La largeur du guide d'onde dépend de la précision de la localisation de flexion souhaitée et avec quels moyens cette flexion sera effectuée : avec les mains la zone de flexion est d'au moins un centimètre et le guide d'onde est large. Par contre, si l'utilisateur prend un stylet (dont la face de contact est de l'ordre du mm²), il faut des guides d'onde moins large et en plus grand nombre. Ces guides d'ondes sont disposés de façon qu'au moins une extrémité de chaque guide d'onde se trouve en vis-à-vis d'un détecteur photoélectrique. Avantageusement, la surface photosensible des détecteurs photoélectriques est de forme rectangulaire pour épouser la forme du guide d'onde. D'autres formes sont également possibles : linéaire, ronde, polygonales, ... La surface photosensible des détecteurs varie de quelques dizaines de µm² à quelques millimètres carrés.

L'interruption de la conduction du faisceau lumineux permet de situer les zones de flexion. Pour situer l'endroit d'interruption, le circuit de gestion 8 envoie pour l'affichage un modèle graphique particulier (« Graphical Pattern » en Anglais), le circuit de gestion 10 analyse alors l'amplitude lumineuse perçue par chaque détecteur. Si la valeur fournie par un détecteur 9 est fortement en dessous de la valeur normale, le faisceau lumineux est interrompu entre la zone de l'écran affichant le modèle et ce détecteur 9. Pour localiser finement le lieu de flexion, l'unité centrale commande au circuit de gestion de l'affichage 8 l'exécution d'un balayage de l'écran et au circuit de gestion des détecteurs une mesure à chaque changement. Avantageusement, le modèle graphique est une ligne dont la largeur correspond à celle d'un guide d'onde, de cette façon des portions carrées de l'écran sont analysés, ce qui fournit des résultats mieux exploitables pour l'application qui utilise les informations de flexion.
Le circuit de gestion 10 fournit à l'unité centrale 2 un tableau de valeurs correspondant aux mesures réalisées sur les détecteurs 9. En fonction du modèle graphique affiché sur l'écran et des valeurs fournies par le circuit de gestion des détecteurs, l'unité centrale 2 détermine la zone de l'écran où se situe la flexion. Selon l'exemple préféré de réalisation, les détecteurs 9 sont placés sur le coté gauche de l'écran 7. Il s'avère que pour un écran carré de 12cm de coté, une matrice de 10 par 10 est suffisante pour identifier les zones fléchies de l'écran. L'écran est divisé en dix lignes et dix colonnes, cent zones sont ainsi individualisés. Selon cet exemple, une colonne correspond à un dixième de l'écran, de ce fait la largeur d'une ligne allumée est au maximum d'un dixième de la largeur de l'écran. Le balayage s'effectue de gauche à droite, le premier balayage consiste à allumer la colonne 1 placée à l'extrême gauche de l'écran. Les détecteurs 9 envoient un premier groupe de dix valeurs à l'unité centrale, chaque valeur correspond à une ligne. La valeur fournie par chacun des dix détecteurs est proportionnelle à la quantité de lumière reçue. Après la colonne 1, la seconde colonne 2 qui se situe à la droite de la première est allumée, et ainsi de suite, jusqu'à la dernière colonne 10, sur le coté droit de l'écran. Lorsque toutes les mesures ont été faites, la mémoire de travail contient dix groupes de dix valeurs.
Voici ci-après un tableau de valeurs fournies pas les détecteurs suite au balayage des dix colonnes :

**TABLEAU 1**

| Col.1 | Col.2 | Col.3 | Col.4 | Col.5 | Col.6 | Col.7 | Col.8 | Col.9 | Co1.10 |
|---|---|---|---|---|---|---|---|---|---|
| 10 | 10 | 10 | 9 | **8** | 1 | 1 | 1 | 1 | 1 |
| 10 | 10 | 10 | 10 | **9** | 1 | 1 | 1 | 1 | 1 |
| 10 | 10 | 10 | 9 | **8** | 1 | 1 | 1 | 1 | 1 |
| 10 | 10 | 10 | 9 | **8** | 1 | 1 | 1 | 1 | 1 |
| 10 | 10 | 10 | 9 | **8** | 1 | 1 | 1 | 1 | 1 |
| 10 | 10 | 10 | 10 | **8** | 1 | 1 | 1 | 1 | 1 |
| 10 | 10 | 10 | 9 | **8** | 1 | 1 | 1 | 1 | 1 |
| 10 | 10 | 10 | 9 | **8** | 1 | 1 | 1 | 1 | 1 |
| 10 | 10 | 10 | 2 | **9** | 1 | 1 | 1 | 1 | 1 |
| 10 | 10 | 10 | 10 | **8** | 1 | 1 | 1 | 1 | 1 |

L'unité centrale 2 analyse pour une ligne donnée, les écarts des valeurs entre une colonne et la suivante, et recherche ensuite la colonne dont les valeurs présentent le plus grand écart avec la colonne précédente. Dans l'exemple illustré par le tableau, les valeurs de la colonne 5 ont le plus d'écart avec les valeurs de la colonne suivante 6. En effet, lorsque les colonnes 1, 2, 3, 4 et 5 sont allumées, les détecteurs placés à gauche reçoivent toute la lumière transmise à travers l'écran car la valeur d'amplitude lumineuse est maximale. A partir de la colonne 6, la quantité de lumière reçue est quasi nulle. La lumière est donc interrompue par une flexion continue et verticale qui se situe au niveau de la colonne 5. L'application qui gère l'affichage de l'écran prend en compte la position de la flexion détectée et modifie l'image affichée en fonction de la position de la flexion détectée. Le balayage de l'écran s'effectue pendant un moment court de façon à ne pas être détectable par l'utilisateur, typiquement chaque colonne est allumée pendant une milliseconde, le balayage dure 10 millisecondes et intervient qu'une seule fois par seconde. De ce fait, le balayage n'occupe que 1% du temps et est ainsi indétectable pour l'utilisateur. Pour des résolutions plus fines, par exemple un balayage sur cent colonnes, il faut diminuer la durée d'allumage d'une colonne de façon à maintenir le balayage complet autour de la valeur de 10 millisecondes.

De cette manière, l'unité centrale 2 détermine les zones de l'écran soumises à des flexions. Si l'appareil 1 possède une fonction de télévision mobile, le programme exécutable dans la mémoire 3 comporte une application de Guide Electronique de Programme permettant à un utilisateur de sélectionner des programmes audiovisuels. Les programmes transmis par le bus numérique 6 et reçus par l'interface 5 sont sélectionnables par une liste affichée sur l'écran 7. Une flexion à l'endroit où s'affiche l'identifiant du programme permet la sélection de ce dernier.

Pour garantir la fiabilité de la mesure, une technique parmi d'autres consiste à réaliser un apprentissage. Dans un premier temps, l'utilisateur active par un menu l'étape d'apprentissage de l'écran, ce qui déclenche l'affichage du message suivant : « apprentissage dans 3 secondes, mettre l'écran parfaitement plat ». L'utilisateur prend alors soin de mettre l'écran sur une surface plane de façon à supprimer toutes les flexions. Au bout de trois secondes, un balayage est effectué pour mesurer la valeur des détecteurs pour chaque colonne lorsque l'écran n'est pas fléchi. L'unité centrale mémorise ainsi un tableau de référence des valeurs de détecteurs, ce tableau a une structure identique à celui du tableau 1. Puis, lors d'un balayage en fonctionnement normal, l'unité centrale compare la valeur courante mesurée par les détecteurs avec la valeur de référence correspondant en calculant le ratio |(valeur mesurée x 10) / valeur de référence|. Les résultats des calculs sont mis dans le tableau 1 et traités pour déterminer l'endroit de la flexion.
L'écran et son dispositif de mesure permettent également de détecter des pressions ponctuelles sur l'écran. L'utilisateur pose l'écran sur une surface molle (en matière plastique) et appuie sur une certaine région de l'écran à l'aide de son doigt ou encore d'un stylet. Au lieu de détecter une flexion sur une colonne, l'unité centrale détecte une flexion sur une petite zone de l'écran. Le tableau 2 illustre un tel cas :

**TABLEAU 2**

| Col.1 | Col.2 | Col.3 | Col.4 | Col.5 | Col.6 | Col.7 | Col.8 | Col.9 | Co1.10 |
|---|---|---|---|---|---|---|---|---|---|
| 10 | 10 | 10 | 10 | 10 | 10 | 10 | 10 | 10 | 10 |
| 10 | 10 | 10 | 10 | 10 | 10 | 10 | 10 | 10 | 10 |
| 10 | 10 | 10 | 10 | 10 | 10 | **7** | 2 | 1 | 1 |
| 10 | 10 | 10 | 10 | 10 | 10 | **8** | 1 | 1 | 1 |
| 10 | 10 | 10 | 10 | 10 | 10 | 10 | 10 | 10 | 10 |
| 10 | 10 | 10 | 10 | 10 | 10 | 10 | 10 | 10 | 10 |
| 10 | 10 | 10 | 10 | 10 | 10 | 10 | 10 | 10 | 10 |
| 10 | 10 | 10 | 10 | 10 | 10 | 10 | 10 | 10 | 10 |
| 10 | 10 | 10 | 10 | 10 | 10 | 10 | 10 | 10 | 10 |
| 10 | 10 | 10 | 10 | 10 | 10 | 10 | 10 | 10 | 10 |

Dans l'exemple illustré par le tableau 2, les valeurs de la colonne 7 ont le plus d'écart avec les valeurs de la colonne suivante 8, mais uniquement pour les lignes 3 et 4, numérotés en partant du haut de l'écran. De ce fait, l'unité centrale en déduit que l'écran est déformé sur une zone localisée en haut à droite de l'écran 7.
L'unité centrale 2 exécute une application enregistrée dans la mémoire 3. Cette application affiche des menus et des graphiques à l'écran qui délimitent des zones. L'utilisateur exerce une flexion sur ces zones afin d'introduire des commandes. Par exemple, une application de traitement de photographie affiche une image et selon les flexions exercées sur l'écran, l'image est déformée. Un exemple consiste en ce que l'utilisateur bombe l'écran vers lui afin de provoquer un zoom sur la partie de la photo centrée par la zone de flexion. Le procédé de détection de zones de flexion peut également détecter des caractéristiques de la flexion, par exemple le rayon de courbure. Si l'écart des valeurs d'une colonne à l'autre est brusque, le rayon de courbure est très prononcé. Pour un écran de 10 cm de large, un écart de valeurs de « 2 » à « 9 » entre deux colonnes consécutives correspond à un rayon de courbure de 1 cm, si l'écart varie de « 2 » à « 9 » sur quatre colonnes, le rayon est approximativement de 4 cm. De ce fait, l'unité centrale utilise le rayon de courbure de la flexion comme paramètre d'entrée, par exemple le rayon de courbure définit la valeur d'agrandissement du zoom pour l'application précédemment citée.

Selon un perfectionnement, des détecteurs sont disposés de chaque coté de l'écran, de cette façon il est possible de détecter plusieurs flexions. Le tableau de valeurs suite au balayage des dix colonnes contient des couples de valeurs fournies par les détecteurs 9 de gauche (1^{ière} valeur) et de droite (2^{nd} valeur). Voici un exemple de tableau de valeurs dans le cas où deux flexions sont exercées sur l'écran :

**TABLEAU 3**

| Col.1 | Col.2 | Col.3 | Col.4 | Col.5 | Col.6 | Col.7 | Col.8 | Col.9 | Col.10 |
|---|---|---|---|---|---|---|---|---|---|
| 10/1 | 10/1 | **9** /1 | 1/1 | 1/1 | 1/1 | 1/2 | 1/**4** | 1/**9** | 1/10 |
| 10/1 | 10/1 | **8**/1 | 1/1 | 1/1 | 1/1 | 1/1 | 1/**5** | 1/**8** | 1/10 |
| 10/1 | 10/1 | **9** /1 | 1/1 | 1/1 | 1/1 | 1/1 | 1/**5** | 1/**8** | 1/10 |
| 10/1 | 10/1 | **9**/1 | 1/1 | 1/1 | 1/1 | 1/1 | 1/**4** | 1/**9** | 1/10 |
| 10/1 | 10/1 | **9** /1 | 1/1 | 1/1 | 1/1 | 1/1 | 1/**5** | 1/**9** | 1/10 |
| 10/1 | 10/1 | **9**/1 | 2/1 | 1/1 | 1/1 | 1/2 | 1/**4** | 1/**8** | 1/10 |
| 10/1 | 10/1 | **9**/1 | 1/1 | 1/1 | 1/1 | 1/1 | 1/**4** | 1/**8** | 1/10 |
| 10/1 | 10/1 | **9**/1 | 1/1 | 1/1 | 1/1 | 1/1 | 1/**5** | 1/**9** | 1/10 |
| 10/1 | 10/1 | **8**/1 | 2/1 | 1/1 | 1/1 | 1/1 | 1/**4** | 1/**8** | 1/10 |
| 10/1 | 10/1 | **9**/1 | 1/1 | 1/1 | 1/1 | 1/2 | 1/**4** | 1/**8** | 1/10 |

Dans l'exemple illustré par le tableau 3, les valeurs de la colonne 3 fournies par les détecteurs 9 à gauche de l'écran 7 ont le plus d'écart avec les valeurs de la colonne suivante 4, l'unité centrale en déduit donc l'existence d'une première flexion au niveau de la colonne 3, le rayon de courbure est court. Les valeurs des colonnes 7, 8 et 9 fournies par les détecteurs 9 à droite de l'écran 8 présentent aussi des écarts, l'unité centrale en déduit donc l'existence d'une seconde flexion centrée sur la colonne 8, comme les écarts concernent trois colonnes, on en déduit que son rayon de courbure est large.
Selon un exemple préféré de réalisation, l'écran de type OLED est fixé à deux poignées à gauche et à droite de sorte qu'en tenant les poignées, un utilisateur peut exercer une flexion sur l'écran. D'autres exemples de réalisation de la présente invention sont également possibles, comme par exemple un appareil photo numérique comprenant un boîtier supportant l'objectif et contenant l'écran OLED qui s'enroule autour d'un axe. L'utilisateur extrait l'écran du boîtier en le tirant sur le coté et introduit ses commandes en exerçant des flexions dessus.
La figure 5 présente un autre exemple de réalisation de la présente invention où l'écran flexible est disposé sur un tapis de billes posé lui-même sur une surface rigide. Un utilisateur exerce une pression sur une zone située entre deux billes, ce qui déforme l'écran en lui faisant subir localement une flexion. Le détecteur photoélectrique placé sur le coté mesure la flexion appliqué à l'écran.

Bien que la présente invention ait été décrite en référence aux modes de réalisation particuliers illustrés, celle-ci n'est nullement limitée par ces modes de réalisation, mais ne l'est que par les revendications annexées. D'autres changements ou modifications pourront être apportés par l'Homme du métier aux modes de réalisation précédemment décrits, sans pour autant sortir du cadre de la présente invention.

## Revendications

1. Procédé de détection d'une flexion exercée sur un écran flexible (7) constitué d'au moins un substrat émettant une pluralité de faisceaux lumineux et un substrat transparent traversé par une partie desdits faisceaux lumineux représentative d'une image affichée;
**caractérisé en ce qu'**une autre partie des faisceaux de lumière se réfléchissent à l'intérieur du substrat transparent pour sortir sur au moins un des côtés du substrat transparent, le procédé comportant une pluralité d'étapes d'affichage d'images associées à une zone de l'écran (7) et une pluralité d'étapes de détection de l'amplitude lumineuse des faisceaux sortant par au moins un côté du substrat, chaque étape de détection mesurant l'amplitude des faisceaux issus de l'image affichée sur l'écran afin de déterminer si la zone associée à l'image est soumise à une flexion.

2. Procédé de détection d'une flexion selon la revendication 1 ; **caractérisé en ce qu'**il comporte une étape d'analyse de la variation des valeurs fournies lors des étapes de détection afin d'en déduire le rayon de courbure de la flexion exercée.

3. Procédé de détection d'une flexion selon l'une des revendications 1 ou 2 ; **caractérisé en ce que** l'affichage de l'image pour la détection intervient suffisamment rapidement pour ne pas être visible d'un utilisateur, l'écran (7) affichant une autre image le reste du temps.

4. Procédé de détection d'une flexion selon la revendication 3 ; **caractérisé en ce que** l'autre image affichée définit des zones sur lesquelles une flexion exercée permet d'introduire une commande.

5. Procédé de détection d'une flexion selon l'une quelconque des revendications précédentes ; **caractérisé en ce que** l'écran comporte également des guides d'onde optique placés à l'intérieur du substrat transparent pour guider les faisceaux de lumière afin qu'ils se réfléchissent à l'intérieur du substrat transparent jusqu'à des détecteurs (9).

6. Procédé de détection d'une flexion selon l'une quelconque des revendications précédentes ; **caractérisé en ce qu'**il comporte une étape d'étalonnage au cours de laquelle l'écran (7) ne subit pas de flexion et une mesure des faisceaux de lumière se réfléchissent à l'intérieur du substrat transparent est effectuée.

7. Procédé de détection d'une flexion selon l'une quelconque des revendications précédentes ; **caractérisé en ce que** deux groupes de détecteurs (9) pour la mesure des faisceaux de lumière se réfléchissant à l'intérieur du substrat transparent sont disposés sur deux côté opposés de l'écran (7), les mesures effectuées par chaque groupe permettant de détecter des flexions dans des zones différentes.

8. Procédé de détection d'une flexion selon l'une quelconque des revendications précédentes ; **caractérisé en ce que** l'écran flexible (7) est disposé sur un tapis de billes posé lui-même sur une surface rigide, la flexion consistant à déformer l'écran entre les billes.

9. Appareil (1) comportant un écran flexible (7) de visualisation d'une image, ledit écran comportant au moins un substrat émettant une pluralité de faisceaux lumineux et un substrat transparent traversé par une partie desdits faisceaux lumineux représentative d'une image affichée ; **caractérisé en ce qu'**une autre partie des faisceaux de lumière se réfléchissent à l'intérieur du substrat transparent pour sortir sur au moins un des côtés de l'écran flexible (7), l'appareil comportant des détecteurs (9) pour la détection de l'amplitude lumineuse des faisceaux sortant par au moins un côté du substrat, les faisceaux de lumière formant une pluralité d'images successivement affichées sur une zone déterminée de l'écran, chaque détecteur (9) mesurant l'amplitude des faisceaux issus de chaque image affichée sur une zone de l'écran (7) afin de déterminer si cette zone est soumise à une flexion.

10. Appareil (1) selon la revendication 9 ; **caractérisé en ce qu'**il comporte un moyen d'analyse (2,3) de la variation d'amplitude des faisceaux issus de chaque image affichée afin d'en déduire le rayon de courbure de la flexion exercée sur la zone.

11. Appareil (1) selon la revendication 9 ou 10 ; **caractérisé en ce que** l'affichage de l'image intervient suffisamment rapidement pour ne pas être visible d'un utilisateur, l'écran (7) affichant une autre image le reste du temps.

12. Appareil (1) selon l'une quelconque des revendications 9 à 11; **caractérisé en ce que** l'écran comporte également des guides d'onde optique placés à l'intérieur du substrat transparent pour guider les faisceaux de lumière afin qu'ils se réfléchissent à l'intérieur du substrat transparent jusqu'aux détecteurs (9).

13. Appareil (1) selon l'une quelconque des revendications 9 à 12 ; **caractérisé en ce qu'**il comporte un moyen d'étalonnage (2,3) consistant **en ce que** l'écran (7) ne subisse pas de flexion et à mesurer l'amplitude des faisceaux de lumière qui sortent par au moins un côté du substrat.

14. Appareil (1) selon l'une quelconque des revendications 9 à 13 ; **caractérisé en ce qu'**il comporte deux groupes de détecteurs (9) pour la mesure des faisceaux de lumière qui sortent par deux côtés du substrat, les deux groupes étant disposés sur deux côtés opposés de l'écran (7), les mesures effectuées par chaque groupe permettant de détecter des flexions dans des zones différentes.

15. Appareil (1) selon l'une quelconque des revendications 9 à 14 ; **caractérisé en ce que** l'écran flexible (7) est disposé sur un tapis de billes posé lui-même sur une surface rigide, la flexion consistant à déformer l'écran entre les billes.

## Claims

1. Method for detecting a flexion exerted on a flexible screen (7) consisting of at least one substrate emitting a plurality of light beams and a transparent substrate traversed by a part of said light beams representative of a displayed picture,
**characterized in that** another part of the light beams is reflected within the transparent substrate to exit on at least one side of the transparent substrate, the method comprises a plurality of picture display steps associated with an area of the screen (7) and a plurality of detection steps of the luminous amplitude of the beams exiting by at least one side of the substrate, each detection step measuring the amplitude of the beams from the displayed picture on the screen in order to determine if the area associated with the image is subjected to a flexion.

2. Method for detecting a flexion according to claim 1, **characterized in that** it comprises an analysis step of the variation of values supplied during the detection steps in order to deduce the radius of curvature of the flexion exerted.

3. Method for detection of a flexion according to claims 1 or 2, **characterized in that** the display of the picture for the detection intervenes sufficiently rapidly to not be visible to a user, the screen (7) displaying another picture the rest of the time.

4. Method for detecting a flexion according to claim 3, **characterized in that** the other picture displayed defines the areas on which a flexion exerted allows the introduction of a command.

5. Method for detecting a flexion according to any one of the aforementioned claims, **characterized in that** the screen also comprises optical waveguides placed within a transparent substrate to guide the light beams so that they reflect inside the transparent substrate as far as the detectors (9).

6. Method for detecting a flexion according to any one of the aforementioned claims, **characterized in that** it comprises a calibration step during which the screen (7) is not subjected to a flexion and a measurement of the light beams reflecting within the transparent substrate is carried out.

7. Method of detecting a flexion according to any one of the aforementioned claims, **characterized in that** two groups of detectors (9) for the measurement of light beams reflecting within the transparent substrate are arranged on two opposite sides of the screen (7), the measurements carried out by each group allowing flexions in different areas to be detected.

8. Method of detecting a flexion according to any one of the aforementioned claims, **characterized in that** the flexible screen (7) is arranged on a beads array itself posed on a rigid surface, the flexion consisting in deforming the screen between the beads.

9. Device (1) comprising a flexible screen (7) for displaying a picture, said screen comprising at least one substrate emitting a plurality of light beams and a transparent substrate traversed by a part of the said light beams representative of a displayed picture, **characterized in that** another part of the light beams reflects within the transparent substrate to exit on at least one side of the flexible screen (7), the device comprising detectors (9) for detection of the light amplitude of the beams exiting by at least one side of the substrate, the light beams forming a plurality of pictures successively displayed on a determined area of the screen, each detector (9) measuring the amplitude of the beam from each picture displayed on an area of the screen (7) in order to determine if this area is subject to a flexion.

10. Device (1) according to claim (9), **characterized in that** it comprises an analysis means (2,3) of the variation in amplitude of the beams from each picture displayed in order to deduce the radius of curvature of the flexion exerted on the area.

11. Device (1) according to claim 9 or 10, **characterized in that** the display of the picture occurs sufficiently rapidly to not be visible to a user, the screen (7) displaying another picture the rest of the time.

12. Device (1) according to any of the claims 9 to 11, **characterized in that** the screen also comprises optical waveguides inside a transparent substrate to guide the light beams so that they reflect inside the transparent substrate as far as the detectors (9).

13. Device (1) according to any one of the claims 9 to 12, **characterized in that** it comprises a calibration means (2, 3) consisting **in that** the screen (7) is not subjected to a flexion and to measure the amplitude of the light beams which exit by at least one side of the substrate.

14. Device (1) according to any one of the claims 9 to 13, **characterized in that** it comprises two groups of detectors (9) for the measurement of light beams which exit by two sides of the substrate, the two groups being arranged on two opposite sides of the screen (7), the measurements carried out by each group allowing flexions in different areas to be detected.

15. Device (1) according to any one of the claims 9 to 14, **characterized in that** the flexible screen (7) is arranged on a beads array itself posed on a rigid surface, the flexion consisting in deforming the screen between the beads.

## Patentansprüche

1. Verfahren zur Erfassung eines Biegedrucks, der auf einen flexiblen Bildschirm (7) ausgeübt wird, welcher mindestens aus einem Substrat, das eine Vielzahl von Lichtstrahlen aussendet, und einem transparenten Substrat, das ein für ein angezeigtes Bild repräsentativer Teil der Lichtstrahlen durchquert, besteht, **dadurch gekennzeichnet, dass** ein anderer Teil der Lichtstrahlen innerhalb des transparenten Substrats reflektiert wird, um an mindestens einer der Seiten des transparenten Substrats auszutreten, wobei das Verfahren eine Vielzahl von Schritten des Anzeigens von Bildern, die einem Bereich des Bildschirms (7) zugeordnet sind, und eine Vielzahl von Schritten des Erfassens der Lichtamplitude der an mindestens einer Seite des Substrats austretenden Strahlen umfasst, wobei jeder Schritt des Erfassens die Amplitude der aus dem am Bildschirm angezeigten Bild stammenden Strahlen misst, um zu ermitteln, ob der dem Bild zugeordnete Bereich einem Biegedruck ausgesetzt ist.

2. Verfahren zur Erfassung eines Biegedrucks nach Anspruch 1, **dadurch gekennzeichnet, dass** es einen Schritt der Analyse der Variation der bei den Schritten des Erfassens gelieferten Werte umfasst, um daraus den Biegeradius des ausgeübten Biegedrucks abzuleiten.

3. Verfahren zur Erfassung eines Biegedrucks nach einem der Ansprüche 1 oder 2, **dadurch gekennzeichnet, dass** das Anzeigen des Bilds für die Erfassung schnell genug erfolgt, um für einen Benutzer nicht sichtbar zu werden, wobei der Bildschirm (7) in der übrigen Zeit ein anderes Bild anzeigt.

4. Verfahren zur Erfassung eines Biegedrucks nach Anspruch 3, **dadurch gekennzeichnet, dass** das andere angezeigte Bild Bereiche definiert, in denen ein ausgeübter Biegedruck es ermöglicht, eine Steuerung einzuleiten.

5. Verfahren zur Erfassung eines Biegedrucks nach einem der vorhergehenden Ansprüche, **dadurch gekennzeichnet, dass** der Bildschirm ebenfalls Lichtwellenleiter aufweist, die innerhalb des transparenten Substrats angeordnet sind, um die Lichtstrahlen zu leiten, damit sie innerhalb des transparenten Substrats bis zu Sensoren (9) reflektiert werden.

6. Verfahren zur Erfassung eines Biegedrucks nach einem der vorhergehenden Ansprüche, **dadurch gekennzeichnet, dass** es einen Schritt des Kalibrierens umfasst, bei dem der Bildschirm (7) keinem Biegedruck ausgesetzt wird und eine Messung der Lichtstrahlen, die innerhalb des transparenten Substrats reflektiert werden, erfolgt.

7. Verfahren zur Erfassung eines Biegedrucks nach einem der vorhergehenden Ansprüche, **dadurch gekennzeichnet, dass** zwei Gruppen von Sensoren (9) für die Messung der innerhalb des transparenten Substrats reflektierten Lichtstrahlen auf zwei entgegengesetzten Seiten des Bildschirms (7) angeordnet sind, wobei die für jede Gruppe durchgeführten Messungen es ermöglichen, Biegedrücke in unterschiedlichen Bereichen zu erfassen.

8. Verfahren zur Erfassung eines Biegedrucks nach einem der vorhergehenden Ansprüche, **dadurch gekennzeichnet, dass** der flexible Bildschirm (7) auf einer Kugelmatte angeordnet ist, die selbst auf einer starren Oberfläche angeordnet ist, wobei der Biegedruck darin besteht, den Bildschirm zwischen den Kugeln zu verformen.

9. Gerät (1) mit einem flexiblen Bildschirm (7) für das Anzeigen eines Bilds, wobei der Bildschirm mindestens ein Substrat, das eine Vielzahl von Lichtstrahlen aussendet, und ein transparentes Substrat, das ein für ein angezeigtes Bild repräsentativer Teil der Lichtstrahlen durchquert, aufweist, **dadurch gekennzeichnet, dass** ein anderer Teil der Lichtstrahlen innerhalb des transparenten Substrats reflektiert wird, um an mindestens einer der Seiten des flexiblen Bildschirms (7) auszutreten, wobei das Gerät Sensoren (9) für das Erfassen der Lichtamplitude der an mindestens einer Seite des Substrats austretenden Strahlen aufweist, wobei die Lichtstrahlen eine Vielzahl von Bildern bilden, die sukzessive in einem bestimmten Bereich des Bildschirms angezeigt werden, wobei jeder Sensor (9) die Amplitude der aus jedem in einem Bereich des Bildschirms (7) angezeigten Bild stammenden Strahlen misst, um zu ermitteln, ob dieser Bereich einem Biegedruck ausgesetzt ist.

10. Gerät (1) nach Anspruch 9, **dadurch gekennzeichnet, dass** es ein Mittel (2, 3) für die Analyse der Variation der Amplitude der aus jedem angezeigten Bild stammenden Strahlen aufweist, um daraus den Biegeradius des auf den Bereich ausgeübten Biegedrucks abzuleiten.

11. Gerät (1) nach Anspruch 9 oder 10, **dadurch gekennzeichnet, dass** das Anzeigen des Bilds schnell genug erfolgt, um für einen Benutzer nicht sichtbar zu werden, wobei der Bildschirm (7) in der übrigen Zeit ein anderes Bild anzeigt.

12. Gerät (1) nach einem der Ansprüche 9 bis 11, **dadurch gekennzeichnet, dass** der Bildschirm ebenfalls Lichtwellenleiter aufweist, die innerhalb des transparenten Substrats angeordnet sind, um die Lichtstrahlen zu leiten, damit sie innerhalb des transparenten Substrats bis zu den Sensoren (9) reflektiert werden.

13. Gerät (1) nach einem der Ansprüche 9 bis 12, **dadurch gekennzeichnet, dass** es ein Mittel (2, 3) für das Kalibrieren aufweist, welches darin besteht, dass der Bildschirm (7) keinem Biegedruck ausgesetzt wird und die Amplitude der aus mindestens einer Seite des Substrats austretenden Lichtstrahlen gemessen wird.

14. Gerät (1) nach einem der Ansprüche 9 bis 13, **dadurch gekennzeichnet, dass** es zwei Gruppen von Sensoren (9) für die Messung der aus zwei Seiten des Substrats austretenden Lichtstrahlen aufweist, wobei die zwei Gruppen auf zwei entgegengesetzten Seiten des Bildschirms (7) angeordnet sind, wobei die von jeder Gruppe durchgeführten Messungen es ermöglichen, Biegedrücke in unterschiedlichen Bereichen zu erfassen.

15. Gerät (1) nach einem der Ansprüche 9 bis 14, **dadurch gekennzeichnet, dass** der flexible Bildschirm (7) auf einer Kugelmatte angeordnet ist, die selbst auf einer starren Oberfläche angeordnet ist, wobei der Biegedruck darin besteht, den Bildschirm zwischen den Kugeln zu verformen.
